# EUROPEAN PATENT APPLICATION

(11) **EP 4 539 178 A1**
(43) Date of publication of application: **16.04.2025**
(21) Application number: 23819344.5
(22) Date of filing: 06.06.2023
(51) Int. Cl.: H01M 8/0656, C25B 1/04, F02B 63/04

(54) **HYDROGEN ENERGY UNINTERRUPTIBLE POWER SYSTEM**

(30) Priority: 10.06.2022 TW 111121632
(71) Applicant: King, Shan-chih, Taichung (CN)
(72) Inventor: HUANG, Bo-yu, Nanyang (CN); LAI, Chih-ming, Taichung (CN); KING, Shan-chih, Taichung (CN)
(74) Representative: Murgitroyd & Company
(86) International application number: PCT/IB2023/055790
(87) International publication number: WO 2023/238015

(57) **Abstract**

The present disclosure relates to the technical field of hydrogen energy power generation, and provides an uninterruptible power supply based on hydrogen energy, which includes a hydrogen production unit, a power storage unit, a power generation device, and a control unit. The hydrogen production unit can prepare oxyhydrogen by an electrolytic method. The power storage unit can supply power to the hydrogen production unit and output electric power to the outside. The power generation device can receive the oxyhydrogen output by the hydrogen production unit and generate electricity, and the power generation device can output electric power to the outside or transmit the electric power to the power storage unit. The control unit communicates with the hydrogen production unit, the power storage unit and the power generation device by electrical signals.

## Description

### TECHNICAL FIELD

The present disclosure relates to an apparatus for utilizing hydrogen energy, and in particular, to an uninterruptible power supply based on hydrogen energy.

### BACKGROUND

In view of the fact that global net zero carbon emission and ESG have been planned, requirements for carbon footprint and green energy in the industry are increasing day by day. If there are no corresponding countermeasures, an impact will be inevitably generated on relevant development of the industry in the near future, or even worse, some enterprises reach a critical point of survival. As hydrogen energy is a clean energy source, a technology for a hydrogen production apparatus is developing.

Referring to Taiwan's invention patentNo. 1550135, the patent discloses a hydrogen making machine equipped with at least one set of main conversion splitters outside a main body, and at least one set of front conversion splitters, transformers and rear conversion splitters inside the main body. A power cable is connected to the main conversion splitters, connected to the front conversion splitters, and then connected to the transformers, the rear conversion splitters, and electrolytic cells. The front conversion splitters, the transformers, and the rear conversion splitters may be in lap joint with a plurality of sets of electrolytic cells, to assemble the plurality of sets of electrolytic cells by using the front conversion splitters and the rear conversion splitters with the front conversion splitters, the transformers and the rear conversion splitters as units, so as to quickly produce oxyhydrogen (that is, a gas mixture of hydrogen and oxygen) in large quantities.

In addition, as shown in FIG. 7 and FIG. 8, Taiwan invention patent No. I639765 discloses a compound green-energy purification device, including: a casing 91 with a water inlet port and a gas outlet port 911, where a lid 912 is arranged at an opening of the water inlet port; a filtration module 92 arranged in the casing 91, where the filtration module 92 includes a first filtration assembly 921 and a second filtration assembly 922; an electrolysis unit 93 arranged in the casing 91, where the electrolysis unit 93 is provided with a heating device 931; and a separation base 94 arranged in the casing 91 and between the filtration module 92 and the electrolysis unit 93. The separation base 94 is provided with a pipe body 941 and at least one hole, and the hole is provided at a bottom of the separation base 94. When water is added from the water inlet port, the water flows into the electrolysis unit 93 through the hole of the separation base 94, and the water is heated into steam by the heating device 931 of the electrolysis unit 93. The steam sequentially passes through the pipe body 941, the first filtration assembly 921 and the second filtration assembly 922, to separate the water from a gas and discharge the gas to the outside of the casing 91 through the gas outlet port. In this way, the water can be effectively separated from the gas, and water resources that have not evaporated into the gas can be recycled, so as to achieve an effect of saving energy.

Based on the improvement of a hydrogen production technology, an economic value of using the hydrogen energy as an energy source is improved, and related applications are constantly developing. However, the prior art focuses on efficiency of hydrogen preparation and a water-gas separation technology. After preparation of hydrogen, the hydrogen is output through a pipeline for use, without considering how to use the hydrogen energy efficiently and without a waste, so that an energy waste may still be caused. Therefore, there is room for improvement in the prior art.

### TECHNICAL PROBLEMS

To solve the problem in the prior art that energy is wasted and cannot be fully used, the present disclosure provides an uninterruptible power supply based on hydrogen energy to solve the problem, which is further explained as follows.

### TECHNICAL SOLUTIONS

An uninterruptible power supply based on hydrogen energy according to the present disclosure includes:
a hydrogen production unit capable of preparing oxyhydrogen by an electrolytic method;
a power storage unit capable of supplying power to the hydrogen production unit and outputting electric power to the outside;
a power generation device including a power generation module and an output module, where the power generation module is capable of receiving the oxyhydrogen output by the hydrogen production unit and generating electricity, and the output module is capable of receiving electric power delivered by the power generation module and outputting the electric power to the outside or transmitting the electric power to the power storage unit; and
a control unit that communicates with at least one of the hydrogen production unit, the power storage unit and the power generation device by an electrical signal and is capable of adjusting a hydrogen production rate of the hydrogen production unit.

In the above uninterruptible power supply based on hydrogen energy, the hydrogen production unit includes a body and a gas outlet pipe, and the gas outlet pipe protrudes from a side of the body; the uninterruptible power supply based on hydrogen energy includes a water storage tank, the water storage tank is arranged between the power generation device and the body of the hydrogen production unit, and the gas outlet pipe of the hydrogen production unit passes through the water storage tank and is connected to the power generation module, so that the oxyhydrogen passes through an interior of the water storage tank in a process of flowing from an interior of the body to the power generation module through the gas outlet pipe.

Further, in the above uninterruptible power supply based on hydrogen energy, the hydrogen production unit includes a flow sensor, the flow sensor is arranged on the gas outlet pipe and is configured to detect a flow of the oxyhydrogen passing through the flow sensor; and the control unit is capable of receiving an electrical signal sent by the flow sensor.

Still further, in the above uninterruptible power supply based on hydrogen energy, the hydrogen production unit includes an air release assembly, the air release assembly is arranged at the gas outlet pipe and is located in the water storage tank, and the air release assembly is capable of discharging the oxyhydrogen into water in the water storage tank when an air pressure in the gas outlet pipe exceeds a preset value.

In the above uninterruptible power supply based on hydrogen energy, a water supply pipe is arranged in a position at the water storage tank close to a bottom, and the water supply pipe communicates with the interior of the body of the hydrogen production unit.

Further, in the above uninterruptible power supply based on hydrogen energy, the power generation module of the power generation device includes a steam output pipe, and the steam output pipe is connected to at least one of the body of the hydrogen production unit, a heat pump and a turbine power generation device.

Further, the above uninterruptible power supply based on hydrogen energy includes a heat collecting plate, where the heat collecting plate is connected to the power generation device to absorb heat generated by the power generation device.

Still further, in the above uninterruptible power supply based on hydrogen energy, the heat collecting plate is connected to a heat pump.

Preferably, the above uninterruptible power supply based on hydrogen energy includes a thermoelectric device, where the thermoelectric device is arranged between the heat collecting plate and the water storage tank or at an intercooler of a turbine power generation device, and the thermoelectric device is capable of generating electricity by using a temperature difference between the heat collecting plate and the water storage tank or a temperature difference between the intercooler and the air.

Preferably, the above uninterruptible power supply based on hydrogen energy includes a gas splitting assembly, where the gas splitting assembly includes a flow-splitting pipe and an outflow pipe, the flow-splitting pipe is connected to a middle section of the gas outlet pipe and located in the water storage tank, and the outflow pipe is connected to the flow-splitting pipe and extends out of the water storage tank from a side wall of the water storage tank.

### BENEFICIAL EFFECTS

With the above technical features, the uninterruptible power supply based on hydrogen energy according to the present disclosure can adjust energy by the power storage unit and the control unit, so as to fully utilize the energy and resources, achieve an effect of uninterruptible power in use, and solve the problem in the prior art that energy is not fully utilized.

### BRIEF DESCRIPTION OF DRAWINGS

FIG. 1 is a schematic diagram of a three-dimensional appearance according to a first preferred embodiment of the present disclosure;
FIG. 2A is a schematic diagram of a three-dimensional appearance according to a second preferred embodiment of the present disclosure;
FIG. 2B is a schematic diagram of an appearance of a gas outlet pipe in another aspect according to a second preferred embodiment of the present disclosure;
FIG. 3 is a schematic diagram of a three-dimensional appearance according to a third preferred embodiment of the present disclosure;
FIG. 4 is a schematic block diagram of another connection manner according to the third preferred embodiment of the present disclosure;
FIG. 5 is a schematic block diagram of the third preferred embodiment of the present disclosure when used in conjunction with a turbine power generation device;
FIG. 6 is a schematic diagram of a three-dimensional appearance according to a fourth preferred embodiment of the present disclosure;

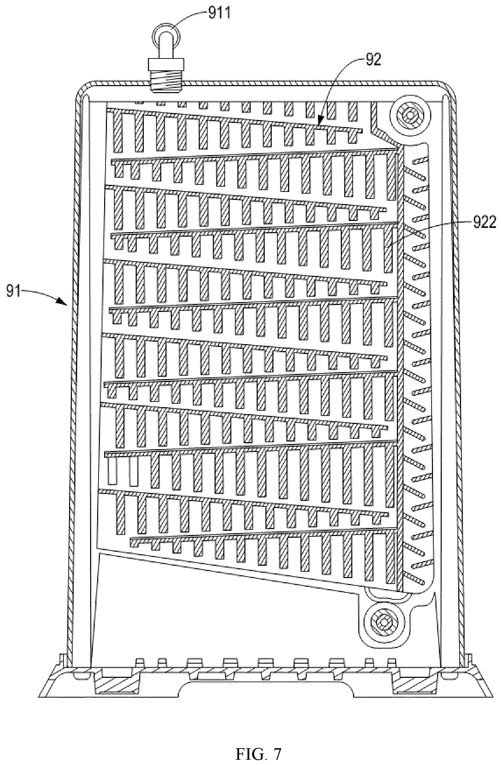

FIG. 7 is a side sectional view of an existing hydrogen production apparatus; and

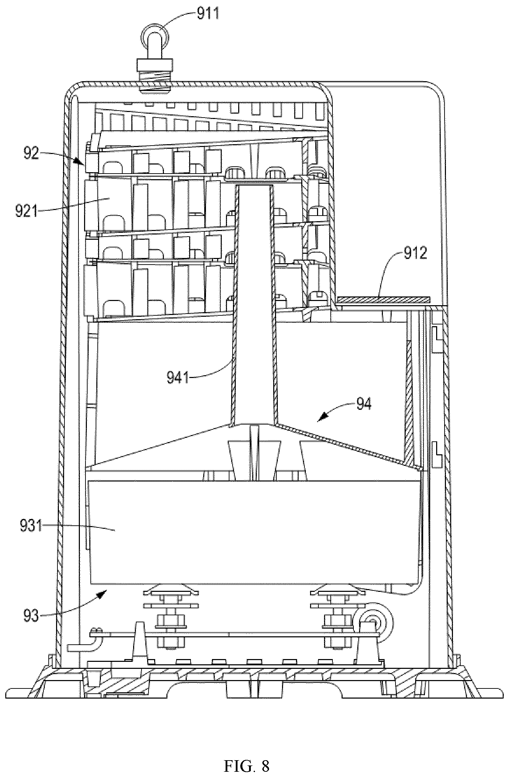

FIG. 8 is another side sectional view of the existing hydrogen production apparatus.

### DISCLOSUREDESCRIPTION OF EMBODIMENTS

To have a detailed understanding of the technical features and practical effects of the present disclosure, and to implement them in accordance with the content of the specification, they are further described in detail with the preferred embodiments shown in the drawings.

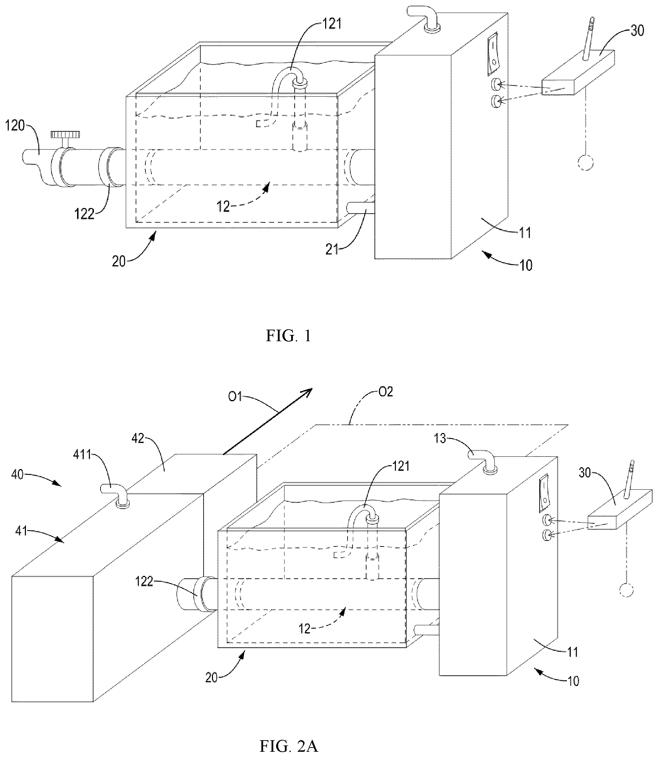

First, the present disclosure provides a hydrogen supply device. As shown in FIG. 1, in a first preferred embodiment of the present disclosure, the hydrogen supply device includes a hydrogen production unit 10, a water storage tank 20, and a control unit 30. The hydrogen production unit 10 includes a body 11 and a gas outlet pipe 12. The body 11 can be used to prepare oxyhydrogen by an electrolytic method, as disclosed in Taiwan's invention patentsNo. I550135 and No. I639765. How to quickly produce oxyhydrogen in large quantities and improve quality of the produced oxyhydrogen pertains to the prior art, and thus an internal structure of the body 11 is not described in detail herein. The gas outlet pipe 12 protrudes from a side of the body 11 and communicates with an interior of the body 11 to output the oxyhydrogen prepared by the body 11, and an end of the gas outlet pipe 12 away from the body 11 is a gas outlet end. Preferably, as shown in FIG. 1, in the first preferred embodiment of the present disclosure, the gas outlet pipe 12 is provided with an air release valve 120 at the gas outlet end.

As shown in FIG. 1, the water storage tank 20 is provided for the gas outlet pipe 12 of the hydrogen production unit 10 to penetrate, so that a gas (that is, the oxyhydrogen) passes through an interior of the water storage tank 20 in a process of flowing from the interior of the body 11 to the gas outlet end through the gas outlet pipe 12. During use, the water storage tank 20 is filled with water, which can provide a water cooling effect for the gas outlet pipe 12. Moreover, if the gas outlet pipe 12 passes through a connection pipe, when the connection pipe is in water and a trace amount of gas leaks, the gas is directly discharged and dissolved in the water, thus reducing a risk of hydrogen leakage.

Further, the hydrogen production unit 10 includes an air release assembly 121, and the air release assembly 121 is arranged at a middle section of the gas outlet pipe 12 and is located in the water storage tank 20. Preferably, the air release assembly 121 includes a pressure relief valve, so that the air release assembly 121 can discharge the excess gas into the water in the water storage tank 20 when an air pressure in the gas outlet pipe 12 exceeds a preset value.

Still further, the hydrogen production unit 10 includes a flow sensor 122, and the flow sensor 122 is arranged in a position at the gas outlet pipe 12 close to the air release valve 120 at the gas outlet end to detect an output flow of the gas outlet pipe 12.

The control unit 30 can communicate with the flow sensor 122 and the body 11 of the hydrogen production unit 10 by electrical signals, that is, electrical connection or signal connection. The electrical connection means that the control unit 30 is connected to the flow sensor 122 and the body 11 of the hydrogen production unit 10 through a line to receive electrical signals sent by the flow sensor 122, and the control unit 30 can adjust a hydrogen production rate of the hydrogen production unit 10. The signal connection means that the control unit 30 receives the electrical signals sent by the flow sensor 122 through wireless signals, and can adjust the hydrogen production rate of the hydrogen production unit 10 through the wireless signals. Therefore, when the flow sensor 122 detects a large gas flow, the control unit 30 can reduce or even zero the hydrogen production rate of the hydrogen production unit 10, so as to prevent a hydrogen supply from being greater than a usage amount, which otherwise causes a danger. When the flow sensor 122 detects a small gas flow, the control unit 30 can also increase the hydrogen production rate of the hydrogen production unit 10 to meet requirements for the oxyhydrogen at the gas outlet end.

Preferably, in the first preferred embodiment of the present disclosure, as shown in FIG. 1, the water storage tank 20 is further provided with a water supply pipe 21, and the water supply pipe 21 is arranged in a position at the water storage tank 20 close to a bottom, and communicates with the interior of the body 11 of the hydrogen production unit 10, so that the water stored in the water storage tank 20 can be supplied to the hydrogen production unit 10 for use as a raw material for hydrogen production.

With the above technical features, the water storage tank 20 can provide the water needed by the hydrogen production unit 10, enables the gas outlet pipe 12 to remain at a low temperature, and can eliminate the safety concern about gas leakage.

As shown in FIG. 2A, a second preferred embodiment of the present disclosure provides an uninterruptible power supply based on hydrogen energy, including the hydrogen supply device as described in the first preferred embodiment and a power generation device 40. The power generation device 40 includes a power generation module 41 and an output module 42. The power generation module 41 is connected to the gas outlet end of the hydrogen production unit 10 of the hydrogen supply device. The power generation device 40 and the body 11 of the hydrogen production unit 10 are located on two sides of the water storage tank 20 respectively. That is, in a process of a gas flowing from the body 11 to the power generation device 40 through the gas outlet pipe 12, the gas necessarily passes through the water storage tank 20, so that the water storage tank 20 provides functions such as cooling by water and dissolving a trace amount of leaked gas. In the second preferred embodiment of the present disclosure, the power generation device 40 and the body 11 are located on the two opposite sides of the water storage tank 20. However, in fact, the power generation device 40 and the body 11 may alternatively be located on two adjacent sides of the water storage tank 20, for example, when the gas outlet pipe 12 is an L-shaped pipe.

Through series connection of the body 11, the water storage tank 20 and the power generation module 41, the water storage tank 20 provides a large heat capacity, which is between the power generation module 41 that generates heat and the hydrogen production unit 10, so as to prevent an operating temperature of the entire uninterruptible power supply based on hydrogen energy from being too high, which otherwise causes a danger.

The power generation module 41 can generate electricity by using the oxyhydrogen output from the gas outlet end 12. For example, the power generation module 41 may be a fuel cell or a combination of an internal combustion engine and a generator, and generate electricity by oxidizing hydrogen. The output module 42 is electrically connected to the power generation module 41, and can receive electric power delivered by the power generation module 41 and output the electric power to the outside. The output module 42 may have functions such as converting an alternating current into a direct current, and distributing and outputting a current.

The output module 42 of the power generation device 40 may further include a splitter for splitting the electric power delivered by the power generation device 40 into electric power output to the outside through a first power supply path O1 and electric power fed back to the hydrogen production unit 10 through a second power supply path O2 to assist in hydrogen production. The splitter pertains to the prior art and is not described in detail herein.

The output module 42 may further have a function of conversion between a direct current and an alternating current, such as the conversion splitter described in Taiwan's invention patentNo. I550135. The output module 42 can also include other electronic circuit assemblies to adjust an effect of output electric power.

In this way, when there is a high electric power demand, the electric power delivered by the power generation device 40 is preferentially output to the outside through the first power supply path O1 for a user to use. When there is a relatively low electric power demand and the power generation device 40 can generate redundant electric power, in addition to outputting electric power to the outside through the first power supply path O1, the electric power can also be fed back to the hydrogen production unit 10 through the second power supply path O2, so as to assist in hydrogen production and increase the yield of the oxyhydrogen.Preferably, through the conversion and current splitting functions of the output module 42, the second power supply path O2 can be matched with a control circuit of a direct current system, such as a combination of pulse width modulation (PWM), fuzzy logic and artificial intelligence (AI), to provide a stepless control range to adjust the oxyhydrogen yield of the hydrogen production unit 10 and supply the oxyhydrogen to the power generation device 40 to improve energy use efficiency.

Still further, as shown in FIG. 2A, the body 11 includes a gas inlet pipe 13, and the gas inlet pipe 13 is arranged on a side of the body 11 and communicates with the interior of the body 11. The power generation module 41 of the power generation device 40 includes a steam output pipe 411, and the steam output pipe 411 is connected to at least one of a heat pump and the gas inlet pipe 13 of the hydrogen production unit 10, so as to convey steam generated by the combination of the internal combustion engine and the generator or the fuel cell to the heat pump for utilization, or to the body 11 of the hydrogen production unit 10, so that the steam can be condensed into water in the body 11 to be used for hydrogen production. The steam output pipe 411 can also supply steam to the heat pump and the body 11 of the hydrogen production unit 10 through a flow-splitting pipe. To improve hydrogen production efficiency, Taiwan's invention patentNo. I639765 discloses that the temperature during electrolysis is increased by the heating device, while in the second preferred embodiment of the present disclosure, the steam generated by the power generation device 40 during power generation is fed back to the body 11 of the hydrogen production unit 10, so that energy required for heating can be reduced, and the hydrogen production unit 10 can prepare the oxyhydrogen in a low energy consumption mode, thereby improving energy utilization efficiency of the uninterruptible power supply based on hydrogen energy according to the present disclosure. In this mode, the hydrogen production unit 10 can be prevented from being frequently switched on and off, which is similar to remaining in a standby state in a frequency conversion mode, so as to overcome the disadvantages that cooling occurs after shutdown and a lot of power is required to raise the temperature after restart.

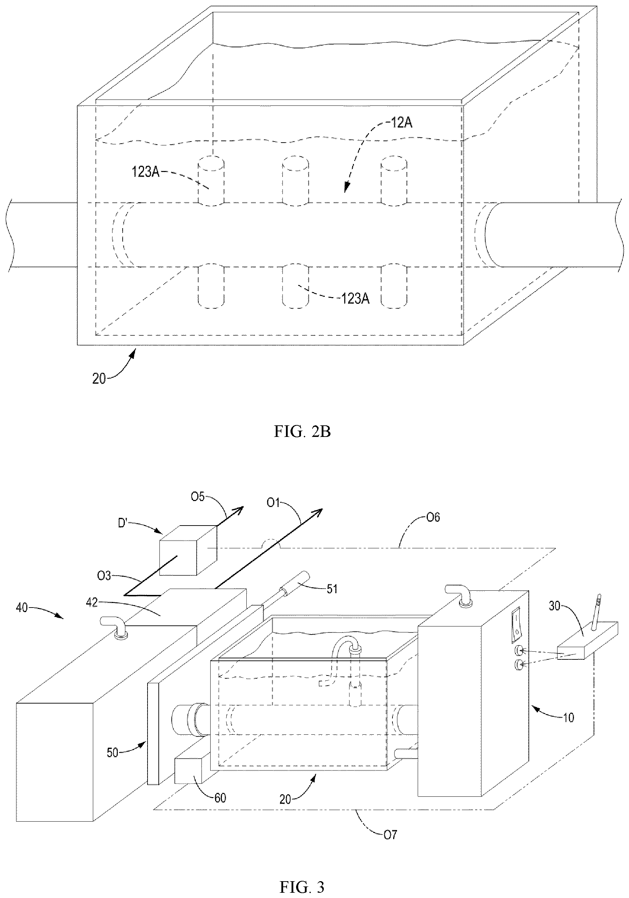

In addition, as shown in FIG. 2B, the gas outlet pipe 12A may be further provided with at least one gas storage portion 123A, so as to increase space of the gas outlet pipe 12A in which the oxyhydrogen can be contained. In this preferred embodiment, the gas outlet pipe 12A is provided with a plurality of gas storage portions 123A, and each gas storage portion 123A is tubular. In this way, when the hydrogen production rate of the body 11 is high, the oxyhydrogen of the power generation device 40 that is not used up can be stored in the gas storage portions 123A, and when the power generation device 40 needs to improve the power generation efficiency, for example, when external power is suddenly cut off, additional oxyhydrogen can be provided within a short time for power generation, thereby improving power supply flexibility of the uninterruptible power supply based on hydrogen energy, and achieving an effect of delaying power failure. The oxyhydrogen is stored in this mode, which is safer than a mode of storing hydrogen by a high pressure, and all the gas storage portions 123A are located in water, thereby further improving safety.

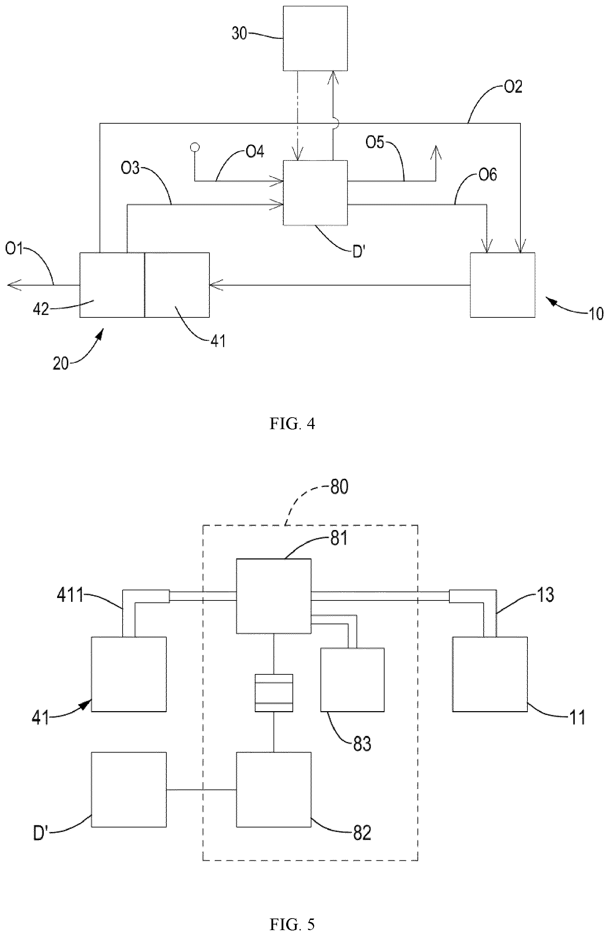

Referring to FIG. 3 and FIG. 4, an uninterruptible power supply based on hydrogen energy according to a third preferred embodiment of the present disclosure differs from the second preferred embodiment in that an output module 42 of a power generation device 40 of the uninterruptible power supply based on hydrogen energy outputs electric power to the outside through a splitter and outputs electric power to a power storage unit D' for storage.

As shown in FIG. 3 and FIG. 4, the power storage unit D' may receive electrical energy delivered by the output module 42 through a third power supply path O3, or receive externally input electrical energy through a fourth power supply path O4. Further, the power storage unit D' may output electrical energy through a fifth power supply path O5, or supply power to the hydrogen production unit 10 through a sixth power supply path O6 to assist in hydrogen production. The control unit 30 communicates with at least one of the hydrogen production unit 10, the power storage unit D' and the power generation device 40 by an electrical signal, so that the control unit 30 can adjust power splitting based on a power supply status of the power supply paths O1, O2, O3, O4, O5 and O6 and an electric quantity of the power storage unit D', and can adjust the hydrogen production rate of the hydrogen production unit 10 based on the information, so as to prevent shortage of hydrogen or prevent an excessive content caused by accumulation of the oxyhydrogen in the system, which otherwise causes a danger.

In addition, as shown in FIG. 3, the uninterruptible power supply based on hydrogen energy is further provided with a heat collecting plate 50 and a thermoelectric device 60. The heat collecting plate 50 is connected to the power generation device 40 to absorb heat generated by the power generation device 40 in a mode of heat conduction or heat radiation, so as to provide an effect of cooling the power generation device 40. The heat collecting plate 50 can be further connected to a heat pump 51 to effectively utilize heat energy generated by the power generation module 41. The thermoelectric device 60 is arranged between the heat collecting plate 50 and the water storage tank 20, and can generate electricity by utilizing a temperature difference between the heat collecting plate 50 and the water storage tank 20 through a thermoelectric effect. As shown in FIG. 3, electric power generated by the thermoelectric device 60 may be fed back to the control unit 30 through a seventh power supply path O7 to further control the body 11 of the hydrogen production unit 10, or directly fed back to the body 11 of the hydrogen production unit 10 to assist in hydrogen production. The electric power generated by the thermoelectric device 60 may alternatively be directly stored in the power storage unit D'.

By outputting electric power primarily to a demand side and secondarily to the power storage unit D', an electric power output effect of the entire system can be increased, and when an external power system fails, the uninterruptible power supply based on hydrogen energy according to the present disclosure can continuously supply power to the outside within a certain period of time, so as to achieve an effect of uninterruptible power.

In addition, the power storage unit D' can be further connected to a green power generation unit, such as a fan, a solar panel, a biogas power generation unit, a hydroelectric power generation unit, a tidal power generation unit or a biological power generation unit, depending on a use condition, so as to further improve stability of the entire system and the uninterruptible power efficiency. In a case of higher hydrogen production efficiency and higher hydrogen-electricity conversion efficiency, the uninterruptible power supply based on hydrogen energy according to the present disclosure can be further expanded. For example, the power storage unit D' can supply power to a dehumidification device, to condense steam in the air into water, and the water flows to the water storage tank 20 as an operating raw material for the hydrogen production unit 10.

In addition, as shown in FIG. 5, the steam output pipe 411 of the power generation module 41 may alternatively be connected to a turbine power generation device 80. Preferably, for example, the turbine power generation device 80 includes a turbine 81, a power generation assembly 82, and an intercooler 83. The steam output pipe 411 is connected to the gas inlet pipe 13 through the turbine 81. That is, high-temperature steam discharged by the power generation module 41 passes through the turbine 81 to drive a rotating shaft of the turbine 81 to rotate, and then is discharged into the body 11 of the hydrogen production unit 10 through the gas inlet pipe 13.

As shown in FIG. 5, the power generation assembly 82 is connected to the rotating shaft of the turbine 81. After the rotating shaft of the turbine 81 is driven by the highpressure steam, the power generation assembly 82 is driven to generate electricity, and the power generation assembly 82 may be electrically connected to the power storage unit D', so as to store delivered electric energy in the power storage unit D' and achieve an effect of uniformly distributing energy. In FIG. 5, a connection relationship between the turbine 81 and the power generation assembly 82 is only to be distinguished from other connection modes such as pipeline connection or electrical connection, and is not intended to limit a specific structure of a power transmission mechanism between the turbine 81 and the power generation assembly 82. The intercooler 83 is connected to the turbine 81, and can collect the heat of the high-temperature gas discharged by the turbine 81, and can further supply heat to the outside. For example, a temperature difference between the intercooler 83 and the air is used to generate electricity by another thermoelectric device.

Through the above description, the steam outlet pipe 411 may be connected to at least one of the heat pump, the gas inlet pipe 13 of the hydrogen production unit 10 and the turbine 81, so as to effectively utilize the steam discharged by the power generation module 41.

A use situation of the third preferred embodiment of the present disclosure is described by way of example.
1. In general, if the power storage unit D' is full of electric energy, the control unit 30 switches to supply electric power delivered by the thermoelectric device 60, the turbine power generation device 80 or another green power generation unit to the hydrogen production unit 10, thereby providing electric energy necessary for hydrogen production.
2. When there is a high load, in addition to directly outputting electric power by the output module 42, the control unit 30 can intervene in the deployment, so that the power storage unit D' provides a power demand difference, so as to quick respond to a short-term demand.
3. If there is a continuous high power demand, the control unit 30 can increase the electric power delivered by the power storage unit D' to the hydrogen production unit 10 and increase the hydrogen production rate, so as to use more oxyhydrogen to generate electricity for a long time to meet the power demand, and more steam products can further drive the turbine power generation device 80 to recharge the power storage unit D'.
4. When the load drops, the control unit 30 readjusts a circuit transmission situation to recharge the power storage unit D' with redundant electric power.
5. In a case that green energy is not available, for example, at night, power consumption is relatively low. Then, the output module 42 may mainly directly output electric power to the power storage unit D', and cooperates with the thermoelectric device 60 and the turbine power generation device 80 to output electric power to the power storage unit D', so as to recharge the power storage unit D' at an off-peak time of power consumption.

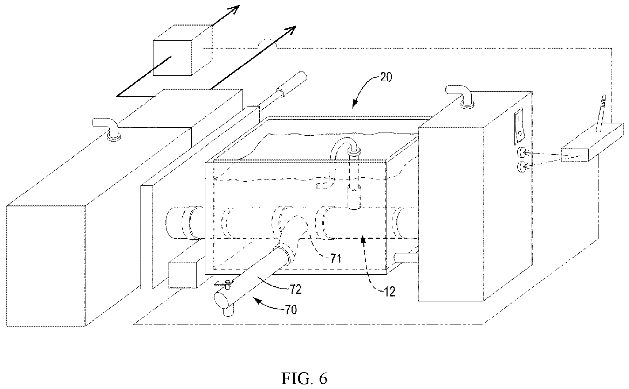

As shown in FIG. 6, an uninterruptible power supply based on hydrogen energy according to a fourth preferred embodiment of the present disclosure differs from the third preferred embodiment in that the uninterruptible power supply based on hydrogen energy further includes a gas splitting assembly 70. The gas splitting assembly 70 includes a flow-splitting pipe 71 and an outflow pipe 72. The flow-splitting pipe 71 is connected to a middle section of the gas outlet pipe 12 and located in the water storage tank 20, and the outflow pipe 72 is connected to the flow-splitting pipe 71 and extends out of the water storage tank 20 from a side wall of the water storage tank 20, to provide oxyhydrogen to other demand sides. **In** the fourth preferred embodiment of the present disclosure, the flow-splitting pipe 71 is a three-way pipe.

Further, the gas outlet pipe 12 in each of the third and fourth preferred embodiments of the present disclosure may be also provided with the gas storage portion 123A as shown in FIG. 2B, so as to increase the oxyhydrogen stored in the water storage tank 20, so that when there is a power supply and demand change in a short time, the oxyhydrogen stored in the gas storage portion 123A may be used to generate electricity, to compensate for a supply-demand difference.

With the above technical features, the present disclosure provides an uninterruptible power supply based on hydrogen energy with the following technical advantages:
1. The electric power generated by the power generation device 40 is stored in the power storage unit D' in a case that a direct output is not fully loaded or not used yet, so that the generated electric power can be used in the future, so as to achieve an effect of saving and no waste of energy.
2. Energy and resource saving: By-products generated when the power generation device 40 operates are further utilized. For example, waste heat may be provided to the heat pump or the thermoelectric device 60 for further utilization, and the main product steam may also be provided to the turbine power generation device 80 to generate electricity and fed back to the hydrogen production unit 10 for recycling.
3. Environmental protection and zero carbon emission: None of the above power generation manners cause carbon emission problems, which is in line with the development trend of intelligent ESG and can provide a long-term uninterruptible power effect.
4. The safety of hydrogen energy use is improved. In the uninterruptible power supply based on hydrogen energy according to the present disclosure, after leaving the hydrogen production unit 10, the oxyhydrogenis directly conveyed to the power generation device 40, and first passes through the water storage tank 20 to avoid leakage of the flammable oxyhydrogen.
5. In a low-temperature environment, an existing battery has a reduced voltage and reduced energy that can be output. In the uninterruptible power supply based on hydrogen energy according to the present disclosure, heat generated by the power generation device 40 may provide an effect of thermal insulation of the power storage unit D', so that the power storage unit D' can maintain a normal function.
6. Hydrogen and oxygen generated by the hydrogen production unit 10 can be output through the gas splitting assembly 70 and modulated into a hydrogen-oxygen flame at 2500-3000°C, and neither carbon monoxide nor carbon dioxide is emitted after combustion. Therefore, there is no danger of carbon monoxide poisoning, and there is no carbon emission.
7. If the energy utilization efficiency permits, the uninterruptible power supply based on hydrogen energy can be further connected to a dehumidification device, and water collected by the dehumidification device can be discharged into the water storage tank 20, so as to fully use energy and steam in the air.

In each preferred embodiment of the present disclosure, the water storage tank 20 is provided between the hydrogen production unit 10 and the power generation device 40 as a water source of the uninterruptible power supply based on hydrogen energy and as a protective measure for using hydrogen. However, in other possible embodiments, the water storage tank 20 may alternatively be omitted or configured in other forms. For example, the hydrogen production unit 10 is arranged adjacent to the power generation device 40, so that the gas outlet pipes 12 and 12A supplying the oxyhydrogen each have an extremely small length, and it is also possible to ensure safety of hydrogen use without providing the water storage tank 20. In addition, the water storage tank may alternatively be integrated into the body 11 of the hydrogen production unit 10, so that the oxyhydrogen first passes through the water storage tank in the body 11 and then leaves the body 11 and is conveyed to the power generation device 40.

To sum up, the uninterruptible power supply based on hydrogen energy according to the present disclosure can not only provide various practical functions and improve an effect of outputting electric power to the outside, but also fully utilize energy and resources, and achieve uninterruptible power in use, thereby solving the problem in the prior art that energy and resources are not fully utilized. Therefore, the uninterruptible power supply based on hydrogen energy according to the present disclosure can implement gas-electricity double buffering storage of a multiplied current, energy-saving standby and stepless precise control, derive multipurpose guide functions, and be used as a long-term and comprehensive uninterruptible power supply (UPS) that conforms to ESG specifications in the whole process.

The above descriptions are only preferred embodiments of the present disclosure and do not limit the present disclosure in any form. Equivalent embodiments with local changes or modifications made by any person of ordinary skill in the art by using the disclosed technical content of the present disclosure without departing from the scope of the technical solutions of the present disclosure do not depart from the content of the technical solutions of the present disclosure and still fall within the scope of the technical solutions of the present disclosure.

### INDUSTRIAL APPLICABILITY

According to the uninterruptible power supply based on hydrogen energy according to the present disclosure, energy is adjusted by the power storage unit and the control unit, so as to fully utilize the energy and resources, achieve an effect of uninterruptible power in use, and solve the problem in the prior art that energy is not fully utilized.

### [Description for reference signs]

10: Hydrogen production unit
11: Body
12, 12A: Gas outlet pipe
120: Air release valve
121: Air release assembly
122: Flow sensor
123A: Gas storage portion
13: Gas inlet pipe
20: Water storage tank
21: Water supply pipe
30: Control unit
40: Power generation device
41: Power generation module
411: Steam output pipe
42: Output module
50: Heat collecting plate
51: Heat pump
60: Thermoelectric device
70: Gas splitting assembly
71: Flow-splitting pipe
72: Outflow pipe
80: Turbine power generation device
81: Turbine
82: Power generation assembly
83: Intercooler
91: Casing
911: Gas outlet port
912: Lid
92: Filtration module
921: First filtration assembly
922: Second filtration assembly
93: Electrolysis unit
931: Heating device
94: Separation base
941: Pipe body
D': Power storage unit
O1: First power supply path
O2: Second power supply path
O3: Third power supply path
O4: Fourth power supply path
O5: Fifth power supply path
O6: Sixth power supply path
O7: Seventh power supply path

## Claims

1. An uninterruptible power supply based on hydrogen energy, comprising:
a hydrogen production unit capable of preparing oxyhydrogen by an electrolytic method;
a power storage unit capable of supplying power to the hydrogen production unit and outputting electric power to the outside;
a power generation device comprising a power generation module and an output module, wherein the power generation module is capable of receiving the oxyhydrogen output by the hydrogen production unit and generating electricity, and the output module is capable of receiving electric power delivered by the power generation module and outputting the electric power to the outside or transmitting the electric power to the power storage unit; and
a control unit that communicates with at least one of the hydrogen production unit, the power storage unit and the power generation device by an electrical signal and is capable of adjusting a hydrogen production rate of the hydrogen production unit.

2. The uninterruptible power supply based on hydrogen energy according to claim 1, wherein the hydrogen production unit comprises a body and a gas outlet pipe, and the gas outlet pipe protrudes from a side of the body; the uninterruptible power supply based on hydrogen energy comprises a water storage tank, the water storage tank is arranged between the power generation device and the body of the hydrogen production unit, and the gas outlet pipe of the hydrogen production unit passes through the water storage tank and is connected to the power generation module, so that the oxyhydrogen passes through an interior of the water storage tank in a process of flowing from an interior of the body to the power generation module through the gas outlet pipe.

3. The uninterruptible power supply based on hydrogen energy according to claim 1, wherein the hydrogen production unit comprises a flow sensor, the flow sensor is arranged on the gas outlet pipe and is configured to detect a flow of the oxyhydrogen passing through the flow sensor; and the control unit is capable of receiving an electrical signal sent by the flow sensor.

4. The uninterruptible power supply based on hydrogen energy according to claim 2, wherein the hydrogen production unit comprises an air release assembly, the air release assembly is arranged at the gas outlet pipe and is located in the water storage tank, and the air release assembly is capable of discharging the oxyhydrogen into water in the water storage tank when an air pressure in the gas outlet pipe exceeds a preset value.

5. The uninterruptible power supply based on hydrogen energy according to claim 2, wherein a water supply pipe is arranged in a position at the water storage tank close to a bottom, and the water supply pipe communicates with the interior of the body of the hydrogen production unit.

6. The uninterruptible power supply based on hydrogen energy according to any one of claims 1 to 5, wherein the power generation module of the power generation device comprises a steam output pipe, and the steam output pipe is connected to at least one of the body of the hydrogen production unit, a heat pump and a turbine power generation device.

7. The uninterruptible power supply based on hydrogen energy according to any one of claims 1 to 5, comprising a heat collecting plate, wherein the heat collecting plate is connected to the power generation device to absorb heat generated by the power generation device.

8. The uninterruptible power supply based on hydrogen energy according to claim 7, wherein the heat collecting plate is connected to a heat pump.

9. The uninterruptible power supply based on hydrogen energy according to any one of claims 2 to 5, comprising a thermoelectric device, wherein the thermoelectric device is arranged between the heat collecting plate and the water storage tank or at an intercooler of a turbine power generation device, and the thermoelectric device is capable of generating electricity by using a temperature difference between the heat collecting plate and the water storage tank or a temperature difference between the intercooler and the air.

10. The uninterruptible power supply based on hydrogen energy according to any one of claims 2 to 5, comprising a gas splitting assembly, wherein the gas splitting assembly comprises a flow-splitting pipe and an outflow pipe, the flow-splitting pipe is connected to a middle section of the gas outlet pipe and located in the water storage tank, and the outflow pipe is connected to the flow-splitting pipe and extends out of the water storage tank from a side wall of the water storage tank.
